# EUROPEAN PATENT APPLICATION

(11) **EP 3 109 994 A1**
(43) Date of publication of application: **28.12.2016**
(21) Application number: 13894952.4
(22) Date of filing: 01.10.2013
(51) Int. Cl.: H02M 7/5395

(54) **FLEXIBLE DIGITAL CONTROLLER FOR POWER CONVERTERS**

(71) Applicant: Wynnertech S.l., 28050 Madrid (ES)
(72) Inventor: CASTAGNOLA WECKESSER, Daniel, 28050 Madrid (ES); UGENA GONZÁLEZ, David, 28050 Madrid (ES); TENA CEREZO, José Manuel, 28050 Madrid (ES); SANZA PÉREZ, Carlos, 28050 Madrid (ES); TÁRRAGA GARCÍA, David, 28050 Madrid (ES)
(74) Representative: Falcon Morales, Alejandro
(86) International application number: PCT/ES2013/000216
(87) International publication number: WO 2015/049393

(57) **Abstract**

The invention relates to a flexible digital controller for power converter, such as inverters, which includes: a first processor which manages the human-machine interface, communications, etc.: and a second processor controlling converter management modules which connect with the power modules. Each processor is provided with a switching controller, memories, buses, timers, etc. The information exchange between processors takes place via RAM memory and FIFO. The converter management modules are divided into: a block for managing driver signals, which includes three-phase PWM and dead band control and signal decoders for faull detection; and a block for acquiring signals of voltage transducers, which includes channels for measuring AC output current and DC current and channels for measuring the AC and DC voltage.

## Description

### Technology sector.

The present invention relates to the architecture of a multiprocessing system for the control of power converters in its generic definition, including direct current power converters, power inverters, static synchronous compensator (STATCOM), active filters etc. This invention falls within the technology sector of electronic controllers for power converters and optimisation of the energy in the power grid

### Technical state of the Art.

Until the seventies, power converters were controller through analogue systems. Use of these analogue controllers involves problems associated with fluctuations in output and a limited accuracy of fit. The document US4870556 stated a solution for a power converter based on a digital device that was consistent in a single micro-processor microcomputer. This way, control was maintained through a method that stored information and proceeded to the execution based on temporal parameters. The document US 8131388B2 stated an electronic controller for a power converter and motor driving circuitry. In this case, the electronic controller includes an external signal and develops a certain input with a power conversion. Based on a predetermined programme the controller produces a result that is also dependent on temporal parameters.

The document US2011182096A1 presents another control system for power converters capable of compensating for a voltage error due to a drop in voltage mainly in a switching element and similar to previous ones based on temporal parameters such as switching time of a pulse width modulation (PWM) modulated signal. Another document is U.S. 2003/0201926 regarding a semiconductor device for the control of an inverter and its control method.

The Spanish document ES2255837B1 presents an electronics controller for bidirectional power converter based on two multilevel inverters where the electronic converter consists of two, three NPC level converters connected through a common direct current (DC) bus and with a connection to the power grid and to the alternating current machine, hardware consisting of two commercial cards based on a digital signal processor (DSP) and a matrix of field programmable gate arrays (FPGAs) and another card designed to control the interface and software of the specific computer to control the converter connected to the network and the converter connected to the machine to thereby enable the system to deliver or consume a certain electrical power.

Control of power converters usually involves a bigger problem than just the simple control of the electronic power device switching, including, among other tasks functions such as self-monitoring, controlling machine interaction with the outside world and recording information conditioned by events. This concept is especially applicable in the context of smart grids.

For this, controllers require further intervention in the management of the human-machine interface, mass data storage, communication with locally interconnected devices (programmable logic controllers, terminal maintenance, additional converters, etc.) and communication with remote monitoring systems, Data Control and Acquisition (SCADA) (usually connected through the Internet. The present invention seeks to provide an answer to the above problems.

For conventional controllers the simultaneous management of these processes implies a significantly higher processing load and is critical reduction in the safety of the performance of the real-time tasks, thus many of the functions are not addressed directly but are delegated to an external computer or controller.

To achieve an optimised platform that can resolve these inconveniences while increasing flexibility and range of controller applications, this invention displays a control of power converters system based on an asymmetric multiprocessing architecture, the central elements of this architecture are two processors or heterogeneous cores and specific application hardware modules. Each processor, with a particular architecture, is responsible for the execution of a group of predefined tasks while the most critical tasks are concurrently handled by specific application hardware modules associated with one of the nuclei. The present invention seeks to provide an answer to the aforementioned problems which documents US2011182096, US2009248181, US2006239047, US2003201926, US8131388 and US4870556A do not resolve, they suggest digital controllers based on a processor but that do not provide a comprehensive and effective solution to the previously mentioned problems. European Patent EP0588199A1 suggests a multiprocessor based on three identical SAB80C166 type general-purpose microcontrollers. Faced with this alternative, the advantage of the architecture proposed in the present invention presides primarily in an increased performance obtained by the use of heterogeneous processors whose architecture adapt better to the nature of the tasks to be solved, as well as in the introduction or specific application modules based on reconfigurable hardware, which increases both the computational power and the flexibility of the controller. Finally, the Spanish Patent ES2255837 suggests a system based on DSP and FPGA commercial cards interconnected by proprietary hardware. This scheme represents a substantival improvement in terms of calculating power, but the type of implementation adapted is in a low-revel degree of integration, and since the totality of both the DSP and the FPGA resources are strongly oriented to the control of the loop monitoring process, the secondary functions are delegated to an external hardware.

### Explanation of the invention.

The present invention is a controller for power converters whose structure is based on two heterogeneous processors that constitute an symmetrical multiprocessing architecture (AMP). Thus, the AMP type structure, known in the field, is aimed at a specific application consistent in the control of power converters in its genetic definition, encompassing direct current power converters, power inverters, STATCOM type compensators, active filters, etc. The controller is composed of one or more printed circuit hoards and the electronic components required to implement this architecture, also considering its partial integration into one or more FPGA type devices as well as the entire or part integration of one or more ASIC type devices.

The two processors both have the following resources: interrupt controller, cache memory, local bus, Flash memory, RAM memory and general purpose timer. These six brocks arc complementary resources of the processors known in the field.

The first processor has a set of general purpose instructions on a CISC or RISE type microarchitecture. It features:
- A real time clock system that provides a temporal reference to be associated with each event stored in the event log.
- A RS-485 type communication port that, along with the MODBUS-RTU protocol links the converter with programmable controllers or with any device, computer or system that supports this standard.
- An Ethernet port that constitutes the TCP/IP protocol physical and link layers, which enables the converter to communicate with the remote SCADA systems, usually through the Internet or with any device, computer or system that supports this standard.
- A USB port to link the converter with a maintenance terminal or other device, computer or system that supports this standard.
- A port for a touch screen.
- An SD card that constitutes the converter mass storage means, where copies of the event log, the set of internal variables during fault situations, the personalised configuration of the system, etc. will be periodically dumped.

This processor is responsible for managing the human-machine interface, communications with the outside world and mass storage. These tasks represent a high processing load which is why they are separated from the critical tasks of regulation and control and supervision of the switching of the drivers of the power switching devices (known as "drivers") which are executed in isolation on the second processor and the converter management hardware modules associated with it. The drivers consist of specific hardware modules that are used to drive the gate of electronic power switching devices (usually IGBTs) and monitor their behaviour.

The second processor is a DSP type and very long instruction word (VL1W) type microarchitecture The processor controls only the converter management modules which are connected with power modules through specific ports, by electrical and fibre optic links. This processor also depends on the I/O digital port.

The exchange of information between the two processors is performed by a random access memory known as RAM, a dual-port and two optional FIFO type memories, that is, First-in First-out.

The converters management modules arc structurally divided into two blocks. The first block is intended for management of the control signal and the status of the drivers, and the second block to the acquisition of signals that come from voltage transducers.

The management of the control signals and driver status block is composed of a three-phase pulse width modulator (PWM) with complementary outputs and control of dead-band and signal decoders or IGBT drivers status signal. The latter allows the detection of fault conditions, activating an error signal which enables the automatic stopping of the converter without processor intervention. In the event faults are detected in the driver, both the error code and its source can be identified by a bus provided for this purpose.

The signal acquisition block is composed of:
- Three alternating current outlet measuring channels. These channels are composed of:
   ∘ An amplifier which conditions the signal levels coming from the current and voltage transducers, adapting them to the ADC converter input voltage requirements.
   ∘ An antialiasing filter which attenuates signals whose band lies above the Nyquist frequency, preventing the occurrence of aliasing errors.
   ∘ An analogue to digital converter (ADC) that converts analogue signals into sequences of digital numbers representing the amplitude of that signal.
   ∘ A digital filter based on a mathematical algorithm that highlights interesting aspects of a discrete digital signal, reducing other aspects considered noise.
   ∘ A downsampler or decimator that reaches a signal with a specific sampling frequency from a signal sampled with a higher frequency.
   ∘ An absolute value extrator which extracts the zero distance of the input signal (polarity reversal of the signal when it is negative).
   o A magnitude comparator which is used for activating an output signal when the input has gone over a determined threshold, enabling the detection of overcurrents without the intervention of the nuclei.
- A measurement channel for the direct current of the bus.
- Three measurement channels of the network's alternating voltage, and a channel acquiring the direct current voltage of the bus composed of an amplifier, antialiasing filter, ADC converter, digital filter and subsampler, whose purpose stated above.

Alternating current output measurement channels enable automatic detection of overcurrents from a programmable threshold. The overcurrent detection of one or more active channels activates a signal which enables the automatic detention of the converter without nucleus intervention.

Bring an asymmetrical architecture and in order to achieve a greater performance and reliability in the execution of the "block of instructions for the firmware", tasks are not shared between the two processors evenly but are assigned specifically considering their nature (criticality and dynamic characteristics), as well as the specific microarchitecture of each processor and its associated hardware.

This scheme guarantees the following premises:
- The most critical processes, that is, those related to the control and supervision of the switching signals, are executed with latency equal to one clock cycle. This is achieved with the help of the converter management modules.
- The execution of the loop monitoring is performed at a constant rate determined by the timer, it is general-purpose associated with the second processor, unable to be delayed or interrupted by any event or secondary task. It is achieved with the help of the second processor with its associated devices (motor DSP, interrupt controllers cache memory, local bus, non-volatile memory such as Flash, RAM, and timer) as well as the elements that make up the information exchange between the first and second processor (RAM memory, FIFOs).
- Secondary processes run in isolation on the first processor, preferably on a real-time operating system that manages the resources of this processor. It is achieved with the help of the first processor and its associated devices (non-volatile memory, RAM, timer, "watchdog, RTC, SD Card SPT interface, UART and RS-485 transceiver type, Ethernet, USB interface, display driver, local bus, cache memory and interrupt controller).

Performance and reliability is increased with this structure. This also leads to increased flexibility, particularly when the power converter management modules are implemented based on programmable logic devices ("complex programmable logic device CPLD) type" or FPGA type). This the controller can be reconfigured simply whether to implement complex modulation strategies (multicarrier, interleaving, etc.) or to support electronics modules of various kinds and amount of power. Briefly, this invention has the following advantages over the known state of the art:
1) Versatility; The proposed architecture simplifies the reconfiguration of the controller to adapt it to various applications within the converters' control area. The implementation of the converter management modules based on reconfigurable hardware allows easy adaptation of the controller in order to operate with drive cards and monitor known power electronic devices such as drivers of various types and features. The support of a wide variety of interlaces simplifies integration of the converters into existing generation systems.
2) Safety and reliability: Major critical tasks are executed by specific application hardware and an isolated processor whose execution flow can not be interfered with by auxiliary tasks. The faults concerning the driving devices of the power switches (drivers) are detected with a latency equivalent to one clock cycle (usually between 10 and 50 nanoseconds). An overcurrent condition, both in the DC bus as well as any of the output phases, can be detected with a latency equal to ADC conversion time (usually between 300 and 1000 nanoseconds). Any error condition, whether a driver failure, overecurrent, etc., causes an automatic shutdown of the converter with a latency equivalent to the time of one clock cycle (usually between 10 and 50 nanoseconds). The architecture allows the realisation of an advanced Watchdog scheme, based on reciprocal supervision between nuclei.
3) Performance: More processing power resulting from the concurrent execution of tasks by using specific application hardware modules. More processing power resulting from the use of multiple nuclei.More processing power resulting from the use of optimised microarchitectures depending on the nature of the assignment. Less software load on the nucleus of the critical tasks resulting from the redundancy of complex tasks management schemes.
4) Accuracy: The oversampling of the acquired signals, its digital processing and subsequent decimation derive from an increase in the signal-to-noise ratio. Digital filtering of oversampled signals with a high sampling ratio and subsequent decimation, results in a higher qualify than that obtained with analogue antialiasing filter and unit sample ratio and as a result of the tolerance in the analogue component signal parameters. Compared with traditional controllers operating in fixed point arithmetic, the execution of regulation algorithms of the "B" nucleus whose ALU is capable of operating in floating point, results in a higher dynamic range, which in turn translates into higher precision.
5) Integration; The state of the art allows the implementation of the controller on a single ASIC integrated circuit The high calculating power and amount of resources available allows a single controller to control multiple power modules, executing both independent and interdependent algorithms.
6) Diagnosis and Maintenance: Both the debugging and synchronisation of the controller are enabled by the real-time monitoring of its internal variables through the "Fast Ethernet" port associated with the "A" nucleus and a streaming protocol. The fault diagnosis is facilitated by the registration of the relevant internal variables in a circular buffer ready in shared memory and able to store a predetermined amount of time. Upon detecting a failure - whatever its origin - the buffer is committed to the mass storage device with attached information that allows subsequent identification and analysis. Improvements in regards to safety and reliability inherent in the architecture result in less need for maintenance.
7) Costs: Improvements in regards to safety and reliability inherent in the architecture have a favourable impact on the real cost of the controller, The proposed architecture allows significant savings on the cost of external equipment, such as programmable logic controllers, data concentrators and industrial computers.

Brief explanation of the drawings.
Figure 1 shows an example of a three-phase power inverter application.
Figure 2 shows the controller architecture.
Figure 3 shows the elements of a converter management module.
Figure 4 shows the management elements of the power module relative to the control and monitoring of drivers for a converter management module.
Figure 5 shows the management hardware for the power module relative to signal acquisition for a converter management module.
Figure 6 shows detail of the current acquisition channels
Figure 7 shows detail of the voltage acquisition channels

### Detailed account of the invention's execution.

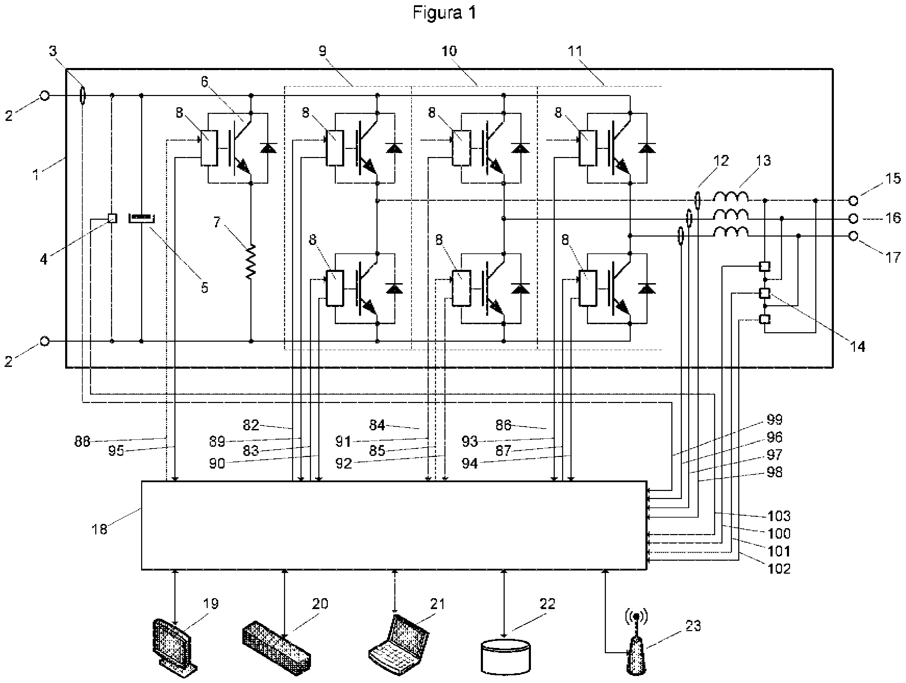

Figure 1 shows an example of classic application consisting of a three-phase power inverter for photovoltaic energy. This inverter is based on a power module (1) known in the field, and a flexible digital controller (18), the subject of this invention. The power module (1) is comprised of an inlet (2) for photovoltaic panels, chopper switch device (6) associated with a driver (8) and a resistor (7), a three-phase inverter bridge (9, 10, 11) composed of 6 power switching devices (143 to 148), and associated with these drivers (8) that command and monitor their status. The three-phase bridge (9, 10, 11) is a bus powered by direct current (DC) whose current and voltage are monitored by two transducers (3, 4), The current injected into the network is handled by ripple fillers (13) and monitored by sound intensity probes in the three phases A, B, C (12). In turn the voltage through voltage probes in the three phases A, B, C (14). The set of signals is introduced into the flexible digital controller (18) which, based on the instructions received from the SCADA (23), the man-machine interface (19) and the maintenance terminal (21), commands the power module operation (1), eventually recording the parameters of interest in mass storage devices (22). The referral of signals to the flexible digital controller (18) is performed with the help of a direct current bus probe (3) and a direct current voltage bus probe (4). As a result of the activity of the power module (1) an electric power reserve is supplied to each of the phases A, R and C (15, 16 and 17) of the network which has been adapted by the action of the flexible digital controller (18).

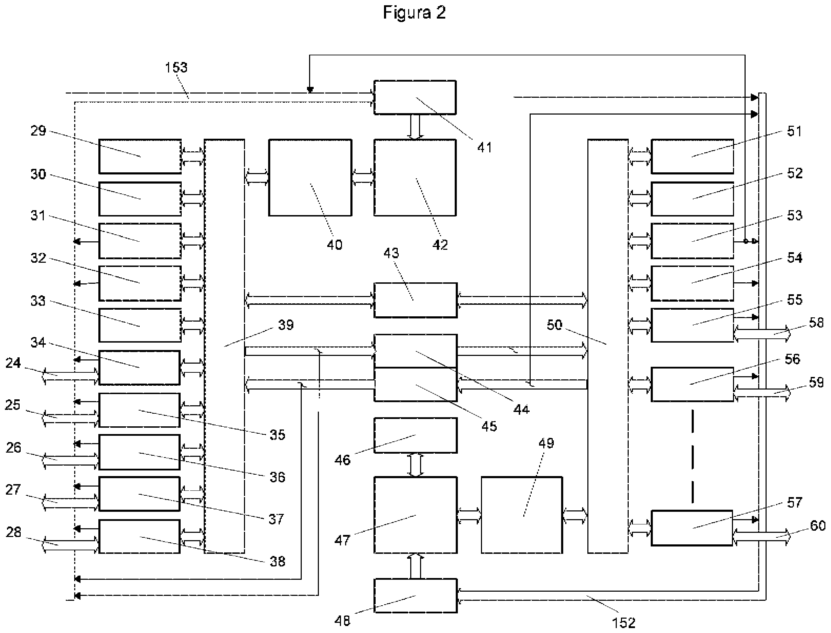

The structure of the flexible controller (18), Figure 2, is developed around two heterogeneous processors (42 and 47), constituting an AMP architecture where the processor (42) manages the general purpose devices and the processor (47) manages the "n" converter management modules (56,57).

The first processor (42) manages signals sent by the interrupt controller (41) and with the help of the configurable cache memory (40) and local bus (39) manages general purpose devices, communications, HM1 and mass storage through their ports (24 to 28). To do this, the first processor (42) has a set of general purpose instructions on a RTSC of CISC microarchitecture. The bus (39) interconnects with the processor (42), through the configurable cache system (40) with its non-volatile memory (29) such as ROM or Flash and RAM memory (30) as well as the FIFO type memories (44, 45) and the RAM memory (43) and other general purpose peripheral devices:
- A general purpose timer (31)
- A Watchdog type device (32),
- The real time clock (33)
- SD cards (24) with the help of a SP1 peripheral interface (34).
- An RS-485 (25) type port with the help of a UART peripheral and RS-485 type transceiver (35).
- An Ethernet port (26) with the help of a peripheral Ethernet MAC and PHY (36).
- A USB port (27) with the help of a USB interface (37).
- A port for touch screen (28) with the help of a display driver (38).
- Other possible peripherals that connect devices.

The interrupt controller (41) linked to the processor (42) is powered by the interrupt request bus (153) to which are connected all peripherals cable of altering the performance of the processor such as the timer (31) general purpose device Watchdog type (32) the real-time clock (33), the SPI interface (34), the peripheral UART and transceiver (35), the Ethernet (36), the USB interface (37), the display driver (38), the FIFO memories (44, 45) and the general synchronism timer (53). The processor (47) presents a DSP type set of instructions on a VLIW microarchitecture. The second processor (47) has an associated interrupt controller (48), a DSP engine (46), and a configurable cache (49) by which it is connected to the local bus (50). This bus (50) interconnects to the second processor (47) through its configurable cache (49) with its non-volatile memories (51) and RAM (52) and the rest of its peripheral devices:
- A general synchronism timer (53)
- A Watchdog (54)
- A digital I/O port (55, 58)
- An "n" set of power converter management modules. In this regard. Figure 2 shows the power converters (56, 57) and the rest of the "n" power converter are shown with a dashed line.

Power converters management modules (56, 57) are connected to the power module (1) through specific ports (59, 60) by electrical and fibre optic links.

The second processor (47) manages the signals sent by the interrupt controller (48) and with the help of the cache memory (49) and local bus (50) especially manages the "n" set of power converter management modules (56, 57).

The interrupt controller (48) linked to the processor (47) is powered by a interrupt request bus (152) to which are connected all peripherals capable of altering the execution flow of the processor such as the general synchronism timer (53), the Watchdog (54), the I/O general purpose interface (55) as well as the "n" set of power converter management modules (56, 57) and the FIFO type memories status signals (44, 45).

Finally, the dual-port RAM memory (43) and the two FIFO memories (44, 45) are connected between the local buses (39,50) allowing the exchange of information between the two processor (42,47). Further, both FIFO memories (44, 45) are connected to the interrupt request bus (152, 153) which connects with the controllers (41, 48).

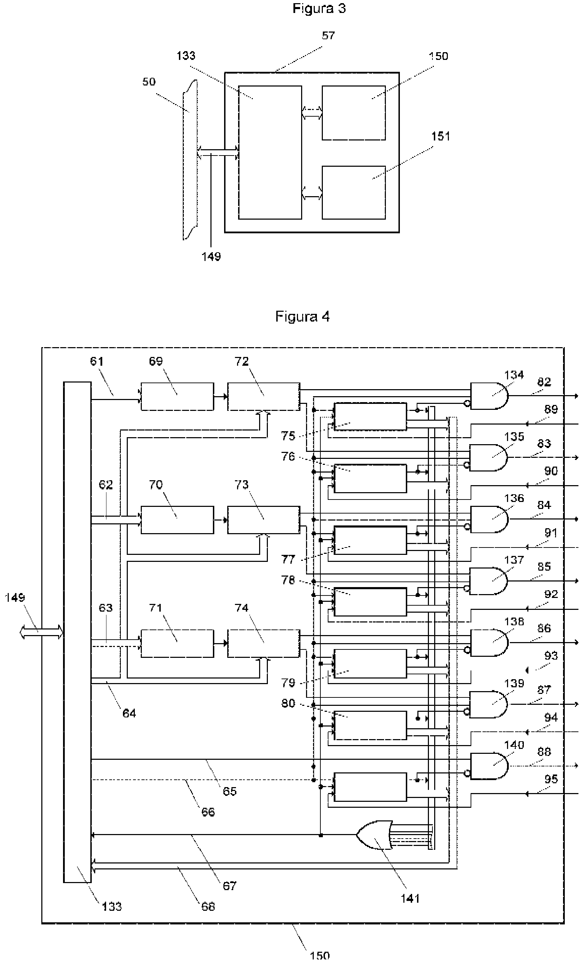

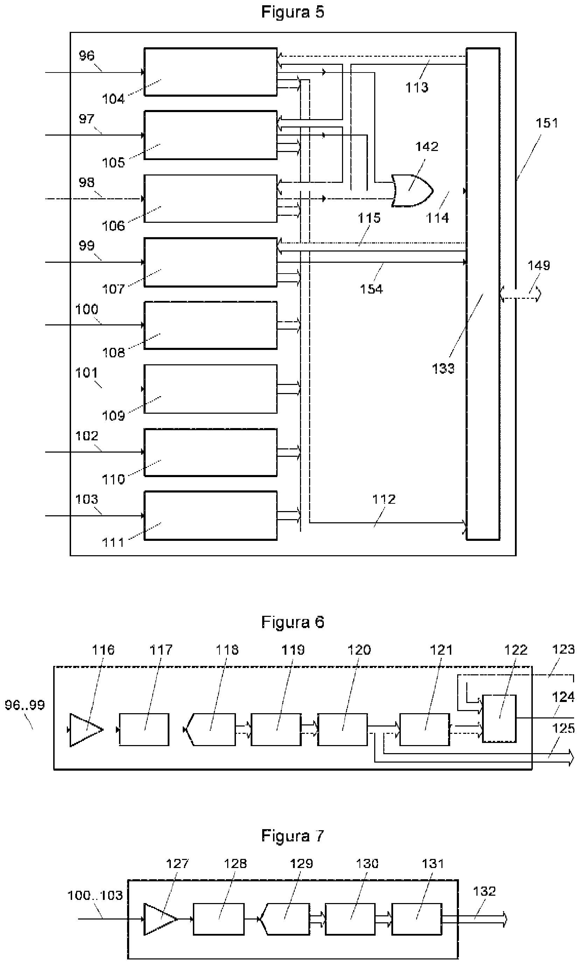

Each of the "n" power converter management modules (56, 57) is structurally divided into two blocks or modules, Figure 3. The first module, Figure 4, is the management and monitoring of drivers module (150), which manages the drivers' control and status signals (82, 83, 84, 85, 86, 87, 88, 89, 90 91, 92, 93, 94, 95), and the second, Figure 5, is the signal acquisition management module (151) coming from the current and voltage probes (96, 97, 98, 99, 100, 101 , 102, 103). Each "n" converter management modules (56, 57) includes a monitoring and status register block and interconnection logic (133) which links to the local bus (50) of the processor (47) through a port (149) as well as the management and supervision of drivers module (150) and the signals acquisition management module (151).

Figure 4, driver monitoring and management module (150), shows how the modulating signals of phase "A" (61), which comes from the monitoring and status register block and interconnection logic (133), is treated by a PWM modulator (69) being the signal that comes out after the PWM modulator (69) treated by a complementary signals generator with dead-hand (72) which is powered by the dead-band control signal parameter (64). The signal generated by the complementary signal generator with dead-band (72) powers two, three input AND gates (134, 135).

The three inputs of the AND gate (134) corresponds to the signal generated by the complementary signal generator with dead-band (72), the inverted signals of the driver status signals decoder (75) and the enable signals of the converter (66), the driver control signal "Phase A - Top" (82) resulting from the AND gate (134) which through a driver (8) controls the power switching device (143). In turn, the driver status signal decoder (75) is powered by the signal status of the "Phase A Superior" driver (89) coming from a driver (8) that commands the power switching devices (143) as well as the overall error signal of the drivers (67) and the enable signal of the converter (66). The signal generated by the driver status signal decoder (75) powers the reading of drivers error codes bus (68).

The three inputs of the AND gate (135) corresponds to the signal generated by the complementary signal generator with dead-band (72), the inverted signal of the driver status signal decoder (76) and the converter enable signal (66), the driver control signal "Phase A - Bottoom" (83) resulting from the AND gate (135) which, through a driver (8) commands the power switching device (144). The driver status signal decoder (76) is powered by the signal status of the "Phase A Bottom" driver (90) coming from a driver (8) that commands the power switching device (144) as well as the overall error signal of the drivers (67) and the enable signal of the converter (66). The signal generated by the driver status signal decoder (76) powers the reading of drivers error codes bus (68).

Similarly the modulating signal of phase "B" and "C" (62, 63) from the block "monitoring and status register and interconnection logic of the converter management module" (133) are treated by two PWM (70, 71) whose signals power two complementary signal generators with dead-band (73, 74) which are powered by the dead-band control signal parameter (64). The signals generated by the complementary signal generators with dead-band (73, 74) power the three input AND gate (136, 137, 138 and 139) along with the inverted signal of the driver status signal decoders (77, 78, 79 and 80) and the converter enable signal (66). The AND gates (136, 137, 138, 139) generate the driver "Phase B - Top (84) and Bottom (85)" control signals that command, through the appropriate drivers (8), the switching power devices (145 to 146) and the driver control signals "Phase C - Top (86) and Bottom (87)" that command through the corresponding drivers (8) the power switching devices (147, 148).

The set of error signals generated by the drivers status signal decoder (75 to 81) end up, through a bus (126), in an OR gate (141) with 7 inputs so that the detection of an error in any of the drivers activates the overall driver error signal.

At the same time, drivers status signal decoders (77, 78, 79 and 80) are powered by the drivers status signal (8) in Phase B Top, Phase B Bottom, Phase C Top and Phase C Bottom (91, 92, 93, and 94) coming from the drivers (8) that command the power switching devices (145-148) as well as the overall driver error signal (67) and the converter enable signal (66). The signals that are generated power the reading of drivers error codes bus (68) as well as the bus (126) that powers an OR gate (141) with 7 inputs.

The chopper modulating signal (65) powers an AND gate (140) that receives the converter enable signal (66) as well as the signal coming from the driver status signals decoder (81) which is powdered by the converter enable signal (66), the overall driver error signal (67) and the "Chopper" driver status signal (95). The driver status signal decoder (81) powers an AND gate (140), the reading of drivers error codes bus (68) as well as the bus (126) which powers an OR gate (141) with 7 inputs. The signal (88) coming from the driver status signal decoder (81) and managed by the AND gate (140) is sent to the chopper switching device (6), which in turn powers - with the signal (95) - the drivers status signal management decoder (81),

That is, the control signals and driver status management modules consist of a three-phase PWM modulator with complementary outputs and deadband control (69-74) and drivers status signal decoders (75 to 81), the drivers status signal decoders (75, 76, 77, 78, 79, 80, 81) are powered by the signals (89 to 95) coming from the divers (8) that command cach of the power switching devices (143-148) and chopper controller (6) which receive the driver control signals for each phase in their top or bottom state (82-95), The latter allows the detection of fault conditions, activating an error signal (67) which enable the automatic stopping of the converter without processor intervention. In the event faults are detected in the driver, both the error code and the source can be identified by a bus (68) provided for this purpose.

The signal acquisition module (151), Figure 5, is composed of three alternating current output measurement channels (104, 105, 106), a direct current measurement channel (107), three network alternating voltage measurement channels (108, 109, 110), and an acquisition channel of the direct current voltage (111). The first three channels allow automatic detection of over-currents from a overcurrent programmable threshold. The overcurrent detection of one or more channels actives an overcurrent signal (114) which enables the automatic stopping of the drive without processor intervention (47).

Fach current acquisition channel (104 to 107), is powered by the AC output signal in phase A (96). phase B (97) and phase C (98) coming from the three-phase current probes (12) and the direct current signal (99) coming from the current probe (3), and like that for the overcurrent signal threshold (113, 115) coming from the registers block of status and interconnection logic (133). Each of the acquisition channels for current and voltage (104 to 111) generates a signal which powers the ADC converter reading bus (112). In addition, each of the current acquisition channels (104, 105, 106) generates another signal that powers the three input OR gate (142) generating the overcurrent signal (114) that powers the registers block of status and interconnection logic (133) while the direct current acquisition channel (107) generates a signal (154) that powers the registers block of status and interconnection logic (133). The voltage acquisition channels (108 to 111) receive signals from AC voltage from the network at Phase A (100), B (101) and C (102) coming from the alternating voltage probes from phases A, B and C (14) as well as the DC bus voltage signal (103) corning from the direct voltage bus probe (4).

As shown in Figure 6, each of the current channels (104, 105, 106 and 107) consists of the following elements connected in series: an amplifier (116), an antialiasing filter (117), an ADC converter (118), a digital filter (119), and own sampler (120), an absolute value extractor (121) and magnitude comparator (122). The signal from the current probe (96-99), corresponding to the transducer signals from the AC output of phase "A" (96), phase B (97) and phase C (98), powers the amplifier (116), which in turn powers an antialiasing filter- (117) and this an ADC converter (118), which sends the signal to a digital filter (119) and this one sends it to a downsampler (120). The signal generated by the downsampler (120) corresponds to the output bus acquisition (125), which is also received by the absolute value extractor (121). The magnitude comparator (122) is powered by the signal produced by the extraction of the absolute value (121) and over-current threshold (123) and generates an overcurrent signal (124) that reaches the three elements OR gate (142) that generated the overcurrent signal (114).

Similarly, Figure 7, the voltage channels (108, 109, 110 and 111) consist of an amplifier (127) powered by the voltage probe signals (100 to 103), as well as an antialiasing filter (128) an ADC converter (129), a digital filter (130) and subsampler (131) which powers the supply bus (132) these device being connected in series according to the order stated

As alternatives, the controller can be implemented in the following ways:
1. One or more printed circuit boards containing two commercial processors, a DSP type one and the other a RISC/CISC general purpose type, and the additional electronic components required (ASiCs, ASSPs, discrete assets, passives, etc.) structurally organised according to the proposed architecture.
2. One or more printed circuit boards containing a FPGA that integrates all or part of the digital functions, and the additional electronics required (ASTCs, ASSPs, discrete assets, liabilities, etc.) structurally organised according to the proposed architecture.
3. One or more printed circuit boards containing an integrated ASIC circuit that integrates all or part of the controller functions, and the additional electronics required (ASiCs, ASSPs, discrete assets, liabilities, etc.) structurally organised according to the proposed architecture.
4. Any mixed implementation resulting from the combination of the above options.

### Industrial application

This invention falls within the technology sector of electronic controllers for power converters and optimisation of the energy in the power grid

## Claims

1. Flexible digital controller (18) for power converters **characterised by** comprising a general-purpose devices management module based on a processor (42) and another exclusive "n" power converters management module (56, 57) based on a second processor (47).

2. Flexible digital controller (i R) for power converters according to claim 1 **characterised by**:
• a first processor (42) connected to the interrupt controllers (41) and configurable cache memory (40) which connects with local bus (39) that links to the FIFO type memories (44, 45) and the dual-port RAM memory (43), a non-volatile memory (29), a RAM type memory (30), a general purpose timer (31) general purpose device Watchdog type (32) the real-time clock (33), the SPI interface, (34), the peripheral UART and transceiver (35), the Ethernet (36), the USB interface (37) and the display driver (38),
the timer (31), the Watchdog (32), the SPI interface, (34), peripheral UART and transceiver (35), Ethernet (36), the USB interface (37) and the display driver (38) being connected to an interrupt request bus (153) connected to the interrupt controller (41),
• a second processor (47) connected with a DSP type motor (46) engine, an interrupt controller (48) and a configurable cache memory (49) that links to the local bus (50) which links to the FIFO type memories (44, 45) and the dual-port RAM memory (43), a non-volatile memory (51), a RAM type memory (52), a general synchronism timer (53), a Watchdog (54), an I/O digital port (55, 58), an "n" set of power converter management modules (56, 57) connected to the power module (1),
being connected to the general synchronism timer (53), the Watchdog (54), the I/O digital port (55, 58) as well as an "n" set of power converter management modules (56, 57) to an interrupt request bus (152) connected to the interrupt controller (48).

3. Flexible digital controller (18) for power converters according to claim 2, **characterised by** a dual-port RAM memory (43), two FIFO memories (44, 45), the following being connected:
• local buses (39, 50) to the dual port RAM (43),
• the local bus (50) with FIFO memories (45) and this memory with the local bus (39).
• the local bus (39) with FIFO memories (44) and this memory with the local bus (50),
and because the status signals from both FIFO memories (44, 45) connect in turn with the request interrupt bus (152) and the request interrupt bus (153) which is powered by the global synchronisation signal generated by the timer (53).

4. Flexible digital controller (18) for power converters according to claim 2 because the second second processor (47) presents a DSP type set of instructions on a VLIW microarchitecture and because the first processor (42) has a set of general purpose instructions on a RISC or CISC microarchitecture and because the peripheral interface, SPI (34) connects with a solid state memory card slot (24), the UART peripheral RS-485 type (35) connects an RS-485 type port (25), the peripheral Ethernet MAC and PHY (36) connects an Ethernet port (26), the USB interface (37) connects the USE port (27) and the display controller (38) connects a port for touch screen (28) and because the power converters management modules (56, 57) are connected to the power module (1) through specific ports (59, 60) by electrical and fibre optic links.

5. Flexible digital controller (18) or power converters according to claim 3 **characterised by** each of the "n" power converters management modules (56, 57) comprises a first control signals and driver status management modules (150) and a second signal acquisition module (151) coming from the voltage and current transducers.

6. Flexible digital controller (18) for power converter according to claim 5 **characterised by** each of the "n" power converters management modules (56, 57) is comprised of a monitoring and status register block and interconnection logic (133) that links to the local bus (50) of the processor (47) through a port (149), with the control signals and driver status management modules (150) and the signal acquisition module (151).

7. Flexible digital controller (18) for power converter according to claim 7, **characterised in that** each control signals and driver status management modules (150) comprises three PWM type modulators (69, 70, 71) connecting each with a complementary signal generator with dead-band (72, 73, 74) which connect each to two AND gates (134-139) and **in that** it also includes 6 drivers status signal decoders (75, 76, 77, 78, 79, 80) connecting each of them to the reading of drivers error codes bus (68), with the drivers error signalling bus (126) which powers the OR gate (141), with the drivers (8) linked to the power switching device (143 to 148) and inverted with an AND gate (134-139)
and that it comprises a drivers status signal decoder (81) linked to the driver (8), in turn linked to the chopper switching device (6), the decoder being connected to driver error signaling bus (126) powering the OR gate (141), the reading of drivers error codes bus (68), driver (8) linked to the chopper switching device (6) and inverted with an AND gate (140),
and that the converter rehabilitation signal (66) and the OR gate (141) of the error signals power each of the drivers status signal decoder (75, 76, 77, 78, 79, 80, 81).

8. Flexible digital controller (18) for power converters according to claim 6 **characterised by** the monitoring and status register block and interconnection logic (133) links in the he control signals and driver status management modules (150) with the three PWM type modulators (69, 70, 71) the signal generators with complementary dead-band (72, 73, 74) through the dead-band control bus, the reading of drivers error codes bus (68) as well as the drivers status signal decoders (75 to 81), the OR gate (141) and the AND gate (140).

9. Flexible digital controller (18) for power converters according to claim 4 **characterised by** the output of the AND gates (134-139) connecting to the drivers (8) linked to the power switching devices (143-148) and the output of the AND gate (140) connects to the driver (8) linked to the chopper switching device (6).

10. Flexible digital controller (18) for power converters (1) according to claim 5 **characterised in that** each signal acquisition module (151) comprises three alternating current output measurement channels (104, 105, 106), a direct current measurement channel (107), three network alternating voltage measurement channels (108, 109, 110), and an acquisition channel of the direct current voltage (111), being connected to all channels (104 to 108) with the ADC converter reading bus (112) and because the for voltage measurement channel (104 to 106) connects with the OR gate (142), being linked the alternating current output measurement channels (104, 105, 106) with the three-phase current probes (12), the direct current measurement channel (107) with the direct current probe (3), the three network alternating voltage measurement channels (108, 109, 110) with the alternating voltage probes from phases A. B and C (14) and the direct current voltage bus acquisition channels (111) with the direct current bus voltage (4).

11. Flexible digital controller (18) for power converters according to claim 10 **characterised by** the monitoring and status register block and interconnection logic (133) links to the ADC converter reading bus (112), three alternating current output measurement channels (104, 105, 106) through the overcurrent signal threshold (113). The measurement channel of the direct current of the bus (107) through the overcurrent signal (114) and the OR gate (142).

12. Flexible digital controllers (18) for power converters according to claim 11 **characterised by** each of the current channels (104, 105, 106 and 107) comprises an amplifier (116), an antialiasing filter (117), an ADC converter (118), a digital filter (119), a downsampler (120), an absolute value extractor (121) and magnitude comparator (122) connected in series according to the order stated.

13. Flexible digital controller (18) for power converters according to claim 12 **characterised by** that the signal generated by the downsampler (120) powers the acquisition bus (125) and that the magnitude comparator (122) is powered by the overcurrent threshold (123) and that the amplifier (116) is powered by the signal of the current probes (96 to 99).

14. Flexible digital controller (18) for power converters according to claim 11 **characterised by** that the voltage channels (108, 109, 110 and 111) consist of an amplifier (127) powered by the voltage probe signal (100 to 103), an antialiasing filter (128) an ADC converters (129), a digital filter (130) and subsampler (131) which powers the supply bus (132) these devices being connected in series according to the order stated.

15. Flexible digital controller (18) for power converters according to claim 1 **characterised by** that it comprises one or more printed circuit boards containing two commercial processors, a DSP type one and the other a RISC/CISC general purpose type, and the additional electronic components required (ASiCs, ASSPs, discrete assets, passives, etc.)

16. Flexible digital controller (18) for power converters according to claim 1 **characterised by** that it comprises of one or more printed circuit boards containing a FPGA that integrates all or part of the digital functions, and the additional electronics required (ASiCs, ASSPs, discrete assets, liabilities, etc.)

17. Flexible digital controller (18) for power converters according to claim 1 **characterised by** that it comprises one or more printed circuit boards containing a FPGA it comprises one or more printed circuit boards containing an integrated ASIC circuit that integrates all or part of the controller functions, and the additional electronics required (ASICs, ASSPs, discrete assets, liabilities, etc.)

18. Flexible digital controller (18) for power converters according to claim 15 to 17 **characterised by** combining any of the above combinations.

19. Control procedure for the power converters of those that chopper switch device consist of (6) associated with a driver (8) and a resistor (7), a three-phase inverter bridge (9, 10, 11) composed of six power switching devices (143 to 148) each associated with a driver (8) powered by a DC bus, **characterised in that** it consists of a power module (1) and a flexible digital controller (18) which comprises;
• a first processor (42) manages signal sent by the interrupt controller (41) and with the help of the configurable cache memory (42) and local bus (39) manages general purpose devices, communications, HMI and mass storage thrrough their ports (24 to 28) wherein the local bus (39) connects with a non-volatile memory (29), one RAM type memory (30), a general purpose timer (31) general purpose device Watchdog type (32) the real-time clock (33), the SPI interface (34), the peripheral UART and transceiver (35), the Ethernet (36), the USB interface (37) and the display driver (38), wherein the interrupt signals generated by the general purpose. device timer (31) the Watchdog device (32), the SPI interface (34), the peripheral UART (35), the Ethernet (36), the USB interface (37), the display driver (38) and the real-time clock (33) power the interrupt request bus (153) which powers the interrupt controller (41).
• a second processor (47) that manages the signals sent by the interrupt controller (48) and with the help of a DSP type motor (46) the cache memory (49) and local bus (50) especially manages the "n" set of power converters management modules (56, 57), which links to the local bus (50) which in turn links to a non-volatile memory (51), a RAM type memory (52), a general synchronism timer (53), a Watchdog (54), an I/O digital port (55, 58), wherein the interrupt signals generated by the general synchronism timer (53) general synchronism, the Watchdog (54), the general purpose I/O interface (55), and the "n" set of power converter management modules (56, 57) power an interrupt request bus (152) which connects to the interrupt controller (48),
and because the exchange of information between both processors (42, 47) is performed with configurable caches (40, 49) configured in bypass and through a dual port RAM memory (43) and two FIFO memories (44, 45) through local buses (39, 50) and bus interrupt request (152, 153) that power the controllers (41, 48) and that the bus request interrupt (153) is powered by the signal generated by the general synchronism timer (53),
any that each "n" set of power converters management modules (56, 57) includes a monitoring and status register block and interconnection logic (133) which links to the local bus (50) of the processor (47) through a port (149) as well as the management and supervision of drivers module (150) and the signal acquisition management module (151)
and that the "n" set of power converters management modules (56, 57), connected to the power module (1) through specific ports (59, 60) by electrical and fibre optic links.

20. Control procedure for the power converters according to claim 19 **characterised by** the driver (8) that commands the chopper switch device (6) according to the signal (88) generated by an AND gate (140) responsive to the chopper modulation signal (65) coming from the registers block of status and interconnection logic (133), to the inverted error coming from the driver status signal decoder (81), and the enable signal (66) coming from the monitoring and status register block and interconnection logic (133) and by the drivers (8) associated with six power switching devices (143 to 148) which command and monitor the condition of the six power switching devices (143 to 148) through the received signals (82 to 86) of AND gules (134-139) and sent (89 to 93) to the drivers status signal decoders (75-80) of the driver monitoring and management module (150),
as well as by the current and voltage that powers the chopper (6,7) and the set of power inverters (9,10,11) are monitored by a direct current bus probe (3) and a direct voltage bus probe (4) that powers the current acquisition channels (107) and voltage (111) of the signals acquisition module (151) and that the current injected into the network is handled by ripple filters (13) and monitored by sound intensity probes in the three phases A, B, C (12) and the voltage is monitored by sound intensity probes (14) in the three phases A, B, C whose signals are received by the current acquisition channels (104 to 106) and voltage (108 to 110) of the signal acquisition module (151),
and that the first processor (42) controls communications with the outside (19,20,21,23) recording parameters of interest in mass storage devices (22),
and that the second processor (47) commands the power module operation (1) based on the set of signals introduced (89-103) in the flexible digital controller (18), the instructions received from the SCADA (23), its man-machine interface (19) and the maintenance terminal (21) the power module thus (1) generating an electric power in each of the phases A, B and C (15, 16 and 17) of the network adapted by flexible digital controller action (18).

21. Control procedure for the power converters according to claim 18 **characterised by** the modulating signal "A", "B" and "C" (61, 62, 63) coming from the block "monitoring and status register and interconnection logic of the converter management module" (133), are treated by two PWM (69, 70, 71) whose signals power two complementary signal generators with dead-band (72, 73, 74) which are powered by the dead-band Control signal parameter (64), powering those signals generated by complementary signal generators with dead-band (72, 73, 74) and three input AND gates (134 to 139) along with the inverted signal of the driver status signal decoders (75 to 80) and the converter enable signal (66) and that the AND gates (134-139) generate driver control signals of Phase A Top (82) and Bottom (83) Phase B - Top (84) and Bottom (85) and driver control signal of "Phase C. Top (86) and Bottom (87)" that commands, through the corresponding drivers (8), the switching power devices (143, 148),
and that the signal of the driver status decoders (75-80) are powered by the signal of the drivers status (8) corresponding to that of Phase A Top, Phase A Bottom, Phase B Top, Phase B Bottom, Phase C Top and Phase C Bottom (89 to 94) as well as the driver overall error signal (67) and the enable converter signal (66), generating the group of signals that power the reading of drivers error codes bus (68) and the power bus (126) of the OR gate (141),
and that the set of error signals generated by the driver status signal decoders (75 to 81) end up, through a bus (126), in an OR gate (141) with 7 inputs activating the OR gate (141) an error signals by the detection of an error in any of the drivers (8),
and that the chopper modulating signal (65) powers an AND gate (140) receiving the enable converter signals (66) as well as the signal coming from the driver status signal decoder (81) which is powered by the converter enable signal (66), the driver overall error signal (67) and the "Chopper" driver status signal (95) and that the decoder status signal drivers (81) powers the AND gate (140), to the the reading of drivers error codes bus (68) and the bus (126) which powers the 7 inputs OR gate (141).
